# EUROPÄISCHE PATENTANMELDUNG

(11) **EP 2 104 196 A2**
(43) Veröffentlichungstag der Anmeldung: **23.09.2009**
(21) Anmeldenummer: 08161896.9
(22) Anmeldetag: 06.08.2008
(51) Int. Cl.: H02G 3/10, E06B 9/68

(54) **Vorrichtung zum Ansteuern eines elektrischen Antriebs für eine Verdunkelungseinrichtung**

(30) Priorität: 20.03.2008 DE 102008015357
(71) Anmelder: Provita GmbH, 63584 Gruendau (DE)
(72) Erfinder: Lott, Oswald, D-63584, Gruendau (DE)
(74) Vertreter: Staudt, Armin Walter

(57) **Zusammenfassung**

Bei einer bekannten Vorrichtung zur Ansteuerung eines elektrischen Antriebs für eine Verdunkelungseinrichtung ist ein Basismodul (10) vorgesehen, das an einer Wand oder in einer Wandöffnung fixiert und mit einem Netzanschluss (13) zur Stromversorgung des Antriebs versehen ist, sowie eine mit dem Basismodul elektrisch und mechanisch lösbar verbundene Steuereinheit (1), die eine Schaltsteuereinrichtung sowie elektrische Eingabe- und Anzeigeelemente zur Ansteuerung des Antriebs trägt. Um die bekannte Vorrichtung hinsichtlich einer Vereinfachung bei der Erstmontage oder bei der Renovierung zu verbessern, wird erfindungsgemäß vorgeschlagen, dass das Basismodul als Wandhalterung ausgelegt ist und dass die Steuereinheit ein Gehäuse (2) aufweist, welches das Basismodul überdeckt.

## Beschreibung

Die Erfindung betrifft eine Vorrichtung zur Ansteuerung eines elektrischen Antriebs für eine Verdunkelungseinrichtung, umfassend ein Basismodul, das an einer Wand oder in einer Wandöffnung fixiert und mit einem Netzanschluss zur Stromversorgung des Antriebs versehen ist, und eine mit dem Basismodul elektrisch und mechanisch lösbar verbundene Steuereinheit, die eine Schaltsteuereinrichtung sowie elektrische Eingabe- und Anzeigeelemente zur Ansteuerung des Antriebs trägt.

### Stand der Technik

Bei der Verdunklungseinrichtung handelt es sich beispielsweise um einen elektrisch ansteuerbaren Rollladen, eine Markise, einen Vorhang, eine Jalousie oder dergleichen. In der Regel ist für die Programmierung oder Steuerung des elektrischen Antriebs eine ortsfeste Steuereinheit in der unmittelbaren Nähe der bereffenden Verdunklungseinrichtung vorgesehen. Typische einfache Steuereinheiten weisen eine Schaltsteuereinrichtung für die Verarbeitung von Steuerbefehlen wie "aufwärts" oder "abwärts", eine Zeitschaltuhr (Timer) sowie entsprechende Eingabetasten auf.

Anstelle der direkten Eingabe der Steuer- und Einstellbefehle in eine ortsfeste Steuereinheit ist es auch bekannt, eine tragbare Fernsteuereinheit einzusetzen, über die Steuerungsdaten drahtlos an eine ortsfeste Steuerung übermittelt werden können. Hierfür sind jedoch zwei elektronische Einheiten erforderlich, nämlich die Fernsteuereinheit mit einer Sendeeinrichtung sowie die Steuerung mit einer Empfangseinrichtung.

Diesen Nachteil vermeidet eine Vorrichtung gemäß der eingangs genannten Gattung, wie sie aus der WO 02/064938 A1 bekannt ist. Bei der darin beschriebenen Vorrichtung ist die Steuereinheit als eine mechanisch und elektrisch lösbar an einer Basiseinheit befestigte und von dieser abnehmbare Steuereinrichtung ausgebildet. Zur sicheren Halterung der Steuereinheit ist die Basiseinheit wannenförmig ausgebildet, so dass sie eine Aufnahme aufweist, in welche die Steuereinheit eingelegt werden kann. In der wannenförmigen Aufnahme sind elektrische Kontaktstifte vorgesehen, die mit entsprechenden Kontaktelementen der Steuereinheit korrespondieren. Die Basiseinheit beinhaltet einen elektrischen Motor oder sie ist zumindest über elektrische Leitungen mit diesem verbunden. Für die Stromversorgung der elektrischen Komponenten ist die abnehmbare Steuereinheit mit einem Akku oder mit einer Batterie ausgestattet.

Mittels der abnehmbaren Steuereinheit kann der Benutzer die Steuerungsdaten bequem an jedem gewünschten Ort eingeben oder überprüfen, ohne dass es hierfür einer Fernsteuerung bedarf. Beim Einsetzen der Steuereinheit in die Aufnahme der Basiseinheit erfolgt automatisch eine Übertragung der eingegebenen Steuerungsdaten zur Antriebseinheit.

Eine weitere Ausführungsform einer abnehmbaren Steuereinheit ist aus der EP 0 513 794 B1 bekannt. Darin wird ein elektrischer Gurtwickler beschrieben, der mit einem Gehäuse versehen ist, das den Antriebsmotor und ein Getriebe umgibt, und an dem eine abnehmbare Steuereinheit befestigt ist. Es wird vorgeschlagen, dass das Gehäuse mehrere Anbringungsbereiche für die Steuereinheit aufweist, so dass die Steuereinheit wahlweise an dem einen oder dem anderen Anbringungsbereich angebracht werden kann. Das Anbringen beinhaltet eine mechanische Fixierung am Gehäuse und eine elektrisch-steuerungstechnische Verbindung mit dem Antriebsmotor. Diese Verbindung erfolgt über ein Flachbandkabel oder eine Steckverbindung, die gleichzeitig zur mechanischen Verrastung dienen kann.

Die bekannten Vorrichtungen ermöglichen es dem Benutzer, Steuerungsdaten ortsunabhängig einzugeben oder zu überprüfen. Dies ist aber ein Komfort, der mit einem größeren Aufwand an anderer Stelle erkauft werden muss. Beispielsweise durch das regelmäßige Austauschen von Batterien oder das Aufladen von Akkus. Die bekannten Vorrichtungen haben außerdem Nachteile bei der Erstmontage oder bei einer Renovierung, wie weiter unten noch näher ausgeführt wird.

### Technische Aufgabenstellung

Der vorliegenden Erfindung liegt die Aufgabe zugrunde, die aus dem Stand der Technik bekannten Vorrichtungen hinsichtlich einer Vereinfachung bei der Erstmontage oder bei der Renovierung zu verbessern.

Diese Aufgabe wird ausgehend von einer Vorrichtung der eingangs genannten Gattung erfindungsgemäß dadurch gelöst, dass das Basismodul als Wandhalterung ausgelegt ist und dass die Steuereinheit ein Gehäuse aufweist, welches das Basismodul überdeckt.

Die erfindungsgemäße Vorrichtung umfasst somit eine von einem Basismodul abnehmbare Steuereinheit, welche die zur Ansteuerung des Antriebs notwendigen elektronischen Bauteile, Bedien- und Anzeigeelemente trägt.

Die Erfindung zielt auf eine Erleichterung bei der bauseitigen Rohinstallation der Vorrichtung oder bei Renovierungsarbeiten ab. Hierfür ist wesentlich, dass das Basismodul als einfache Wandhalterung ausgebildet und an oder in einer Wand befestigt ist, und dass die abnehmbare Steuereinheit ein Gehäuse aufweist, das so ausgelegt ist, dass es das Basismodul im montierten Zustand vollständig überdeckt.

Im Gegensatz zum bisherigen Stand der Technik, bei dem das Basismodul eine komplexe elektronische Einheit darstellt, die außerdem mit einer Aufnahme für die Steuereinheit versehen ist, ist das Basismodul gemäß der Erfindung als einfaches mechanisches Bauteil ausgelegt, das beispielsweise bei der Montage in einer rückseitigen Aufnahme der Steuereinheit verschwindet.

Lediglich die Stromversorgung für die elektrischen Eingabe- und Anzeigeelemente der Steuereinheit erfolgt in der Regel über den am Basismodul anliegenden Netzanschluss. Das Basismodul dient dabei sowohl zur Fixierung der Steuereinheit an der Wand als auch zur Bereitstellung des elektrischen Anschlusses.

Das bedeutet, dass das Basismodul bei der Rohinstallation in das Mauerwerk eingesetzt oder auf die betreffende Wand aufgebracht werden, oder bei einer Renovierung im Mauerwerk oder auf der Wand verbleiben kann, wie dies bei elektrischen Baueinheiten aus einem Unterputzelement und einem Aufputzelement bekannt ist, wie etwa Steckdoseneinsätzen oder elektrischen Wandschaltern.

Je einfacher und robuster das Basismodul gehalten ist, umso geringer sind Beeinträchtigungen durch die Bauarbeiten im Verlauf bauseitiger Installations- oder Renovierungsarbeiten. Bei der erfindungsgemäßen Vorrichtung ist vorgesehen, dass die Steuereinheit mitsamt der darin eingesetzten teueren Elektronik erst nach Abschluss der Arbeiten auf das Basismodul aufgesetzt und mit diesem elektrisch und mechanisch verbunden wird. Dadurch wird vermieden, dass die elektronischen Bauteile der Steuereinheit während Bau- oder Renovierungsarbeiten beschädigt oder das Gehäuse der Steuereinheit - das in der Regel aus hochwertigem Material mit aufwändig gestalteter Oberfläche besteht - verschmutzt oder zerkratzt wird.

Wesentlich ist demnach, dass das Gehäuse der Steuereinheit so ausgelegt ist, dass es das Basismodul vorzugsweise vollständig überdeckt. Das Gehäuse besteht aus einem Teil oder aus mehreren Teilen. Ein mehrteiliges Gehäuse kann beispielsweise ein Mittelteil sowie ein den Außenrand des Basismoduls überdeckendes oder umgebendes und von außen sichtbares Rahmenteil - insbesondere einen Zierrahmen - umfassen. Rahmenteil und Mittelteil werden dabei separat am Basismodul befestigt, oder die Teile sind kraft- oder formschlüssig so miteinander verbunden, dass zur Befestigung des Gesamt-Gehäuses am Basismodul die Fixierung eines der Teile genügt.

Das Gehäuse der Steuereinheit dient somit zusätzlich zur Verblendung des vorab montierten Basismoduls. Das Basismodul kann daher aus einem einfachen und robusten Bauteil ohne kostspielige Oberflächengestaltung ausgelegt sein, das ohne Bedenken Montage- und Renovierungsarbeiten ausgesetzt und dabei zerkratzt oder verschmutzt werden darf. Nach dem Aufsetzen der Steuereinheit ist das Basismodul nicht mehr sichtbar; weitere Verblendungen am Basismodul sind somit nicht erforderlich.

Zur Befestigung der Steuereinheit am Basismodul sind vorzugsweise Rastmittel vorgesehen, und die elektrische Verbindung zwischen Steuereinheit und Basismodul ist vorzugsweise als elektrische Steckverbindung ausgeführt.

Im Idealfall ist das Gehäuse der Steuereinheit so ausgelegt, dass es das Basismodul umschließt.

Das Gehäuse deckt das Basismodul im Idealfall somit vollständig ab und verhindert die Sicht darauf. Alle freien Oberflächen des Basismoduls sind vom einteiligen oder mehrteiligen Gehäuse der Steuereinheit umgeben.

Ein Teil des Basismoduls kann in eine Unterputzdose ragen, in der auch der Anschluss zur Netzspannung verlegt ist und aus der auch die Stromversorgungs-und Steuer- und Datenleitungen zum elektrischen Antrieb abgehen können. Im einfachsten Fall weist das Basismodul eine plane Rückseite auf, mittels der es an einer Wand befestigt ist. Im einfachsten Fall ist das Basismodul als Aufputz-Wandmontageplatte ausgebildet

Die Steuer- und Datenleitungen für die Steuerbefehle an den Antrieb können unmittelbar an der Steuereinheit enden oder mittelbar über einen elektrischen Kontakt zwischen Basismodul und Steuereinheit. Bei einer besonders bevorzugten Ausführungsform ist vorgesehen, dass die Steuereinheit mit einem Steckkontakt zur elektrischen Verbindung mit einer Steuerleitung an den Antrieb versehen ist.

Über denselben elektrischen Kontakt kann gleichzeitig die Stromversorgung des Antriebs erfolgen.

Es hat sich außerdem als vorteilhaft erwiesen, wenn die Stromversorgung für die elektrischen Eingabe- und Anzeigeelemente ausschließlich über den Netzanschluss des Basismoduls und einen in der Schaltsteuereinrichtung vorgesehenen Spannungswandler erfolgt.

Hierbei weist die Steuereinheit keine eigene Stromversorgung auf. Ein Austauschen von Batterien oder ein Aufladen von Akkus ist somit nicht erforderlich. Beim Abnehmen der Steuereinheit vom Basismodul ist die Steuereinheit stromlos, sie kann also auch nicht programmiert oder darin eingegebene Daten überprüft werden.

Vorzugsweise ist der Spannungswandler als Schaltnetzteil ausgebildet.

Ein Schaltnetzteil ist eine elektronische Schaltung zur Umwandlung einer Eingangsspannung in eine kleinere oder größere Ausgangsspannung. Im Vergleich zu traditionellen, linear geregelten Netzteilen mit Transformatoren zeigen Schaltnetzteile einen hohen Wirkungsgrad und sie sind kompakter und leichter aufgebaut. Die geringe Einbaugröße erleichtert die Unterbringung in der Steuereinheit. Der hohe Wirkungsgrad, der über 90% betragen kann, führt zu einer geringeren Verlustleistung und damit einhergehend zu einer geringeren Erwärmung und geringeren Kühlproblemen.

Es hat sich besonders bewährt, wenn das Schaltnetzteil eine Leistung zwischen 20 und 100 Watt bei einer Ausgangsspannung im Bereich von 12 bis 60 Volt aufweist.

Bei der erfindungsgemäßen Vorrichtung laufen Leistungs- und Steuerelektronik über das Schaltnetzteil zusammen, wobei aus der Ausgangsspannung im Bereich von 12 bis 60 Volt des Schaltnetzteils geeignete Kleinspannungen für die spezifischen Anforderungen der Leistungs- und Steuerelektronik abgezweigt werden können.

In dem Zusammenhang hat es sich als günstig erwiesen, wenn am elektrischen Antrieb eine Spannung von maximal 60 V anliegt.

Diese Spannung liegt im Bereich der sogenannten "Sicherheitskleinspannung", ohne Gefährdungspotenzial, die sich gegenüber der üblichen Haushalts-Netzspannung von 230 Volt auch durch eine höhere Betriebsicherheit auszeichnet. Dies ist insbesondere dann von Bedeutung, wenn der elektrische Antrieb in einem Bereich untergebracht ist, in dem Feuchtigkeit oder Verschmutzungen zu Störungen führen können, wie etwa in einem Rollladenkasten.

Eine besonders bevorzugte Ausführungsform der erfindungsgemäßen Vorrichtung zeichnet sich dadurch aus, dass das Gehäuse der Steuereinheit eine vertikal orientierte Einbauachse sowie eine Rückseite aufweist, über welche die elektrische und mechanische Verbindung mit dem Basismodul erfolgt, sowie eine Vorderseite mit einem nach oben oder schräg nach oben weisenden Flächenabschnitt, auf dem ein Anzeigelement vorgesehen ist.

Die Steuereinrichtung ist üblicherweise in einer Höhe angebracht, die tiefer liegt als die Kopfhöhe des Bedieners. Bei der bevorzugten Ausführungsform ist die Vorderseite des Gehäuses so gestaltet, dass sie einen nach oben weisenden Flächenabschnitt aufweist, auf den der Bediener herabblicken kann. Dort ist ein Anzeigelement ist Form eines Displays vorgesehen, das somit aus der Sicht des Bedieners von oben betrachtet werden kann, was die Ablesbarkeit erleichtert.

Die erfindungsgemäße Steuereinheit beinhaltet alle für die Ansteuerung des Antriebs notwendigen elektronischen Bauteile, wie etwa eine CPU mit Timer, ein elektronisches Bauteil für die Motorstromsteuerung, einen AC/DC-Spannungswandler und dergleichen. Eine weitere Verbesserung ergibt sich, wenn die Steuereinheit mindestens einen Anschluss für ein separates Mess- oder Sensorelement aufweist.

Die Steuereinheit ist dabei mit einem weiteren Funktionsmodul erweiterbar, wie etwa einem Funk- oder IR-Empfangsmodul, einem Dämmerungsmodul, einem Sonnenmodul, einer Alarmeinrichtung, einem Bewegungssensor, einem Temperatursensor und/oder einer Funkuhr.

### Ausführungsbeispiel

Ein Ausführungsbeispiel der Erfindung ist in der Zeichnung dargestellt und wird nachfolgend näher erläutert. In der Zeichnung zeigt im Einzelnen
- **Figur 1**: eine Ausführungsform der erfindungsgemäßen Vorrichtung zur An- steuerung eines elektrischen Antriebs in perspektivischer Ansicht, und
- **Figur 2**: das Basismodul und die Steuereinheit der Vorrichtung gemäß Fig. 1 in einer Explosionsdarstellung.

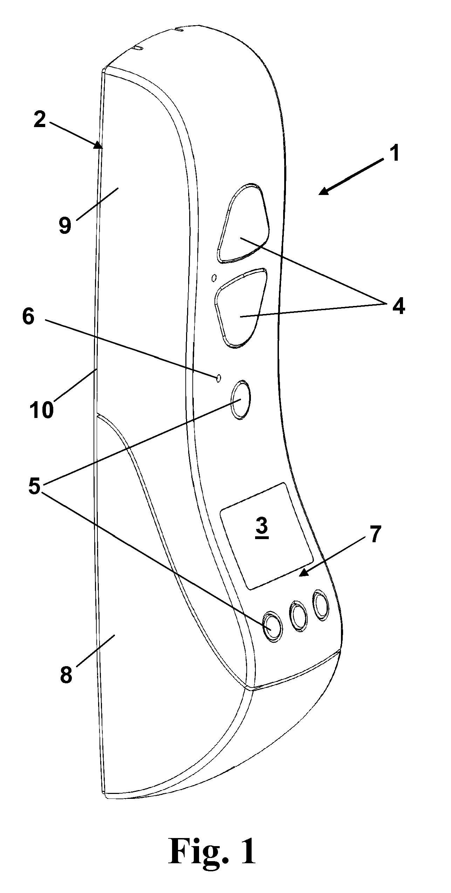

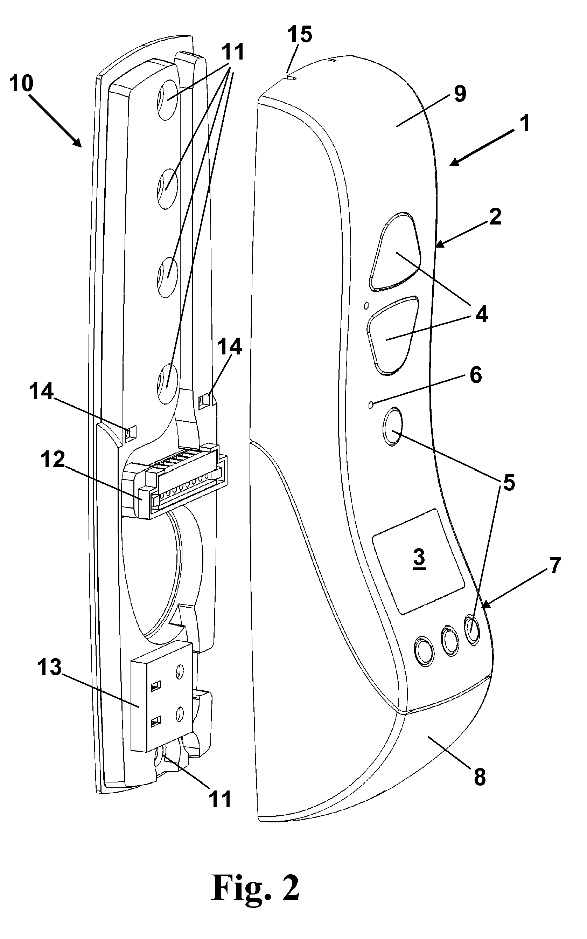

In der perspektivischen Darstellung von **Figur 1** ist die Bezugsziffer 1 einer Steuereinheit für einen Rollladenantrieb zugeordnet. Das Gehäuse 2 der Steuereinheit 1 besteht aus einem hochwertigen Kunststoff. Es umfasst ein Unterteil 8, das an einer Wandhalterung 10 (siehe auch Figur 2) befestigt ist und auf das eine farblich abgesetzte Blende 9 aufgesetzt ist.

Die Blende 9 weist Öffnungen für Display 3, Bedientasten 4 für die manuelle Einleitung der Auf- und Abbewegung des Rollladens, Funktionstasten 5 zum Abspeichern von Daten und dergleichen, ein LED 6 zur Anzeige des Betriebszustands sowie für einen Resetknopf auf. Die Vorderseite des Gehäuses 2 ist mit einem schräg nach oben weisenden Flächenabschnitt 7 versehen, auf dem das Display 3 angeordnet ist.

Das Gehäuse 2 umschließt eine (nicht dargestellte) Steuerplatine, auf der die zur Ansteuerung des Antriebs notwendigen elektronischen Bauteile montiert sind. Dabei handelt es sich im Wesentlichen um ein Schaltnetzteil, mittels dem die Eingangsspannung von 230 V in eine Ausgangsspannung von 30 V transformiert wird. Die Ausgangsspannung ist nach Durchlaufen eines AC/DC-Wandlers unmittelbar für den Betrieb des 30 V-Gleichspannungsmotors geeignet. Kleinere Spannungen von zum Beispiel 5 V für den Betrieb der Steuerelektronik werden daraus abgezweigt. Weiterhin sind auf der Platine eine CPU mit Timer, Speicher und Steuersoftware montiert, sowie ein IC-Baustein für die Motorstromsteuerung und dergleichen.

Die Wandhalterung ist in der Explosionsdarstellung von **Figur 2** insgesamt mit der Bezugsziffer 10 bezeichnet. Sie ist als Spritzteil in Form einer im Wesentlich flachen Kunststoffplatte einer Dicke von 2 mm ausgeführt, die mit einer Anzahl von Bohrungen 11 zur Befestigung an einer Wand versehen ist. Die Bohrungen 11 sind in einem Raster angeordnet, das zu den gängigen Einbaukästen von Rollladengurtwicklern passt. Die Wandhalterung 10 ist mit einer maximalen Breite von 65 mm sowohl zur Abdeckung derartiger Einbaukästen als auch üblicher Unterputz-Anschlussdosen geeignet. Im Ausführungsbeispiel beträgt die Länge der Kunststoffplatte 20 cm.

Der Motor ist über eine Steuerleitung und eine Stromleitung mit der Steuereinheit 1 verbunden. Die Steuer- und Stromleitung wird während der Rohinstallation verlegt, und sie endet in einer Unterputzdose hinter der Wandhalterung 10. Die Steuerleitung wird über eine 6-polige Buchsenleiste 12 der Wandhalterung nach außen geführt. Die Stromleitung, die an die Hausnetzspannung von 230 V angeschlossen ist, wird über einen Stromanschluss in Form einer auskragenden Buchse 13 der Wandhalterung 10 nach außen geführt. Buchsenleiste 12 und Buchse 13 kommen nach dem Aufsetzen der Steuereinheit 1 auf die Wandhalterung 10 mit korrespondierenden Kontaktstiften beziehungsweise mit einem Stromstecker der Steuerplatine in Eingriff.

Zur Befestigung der Steuereinheit 1 auf der Wandhalterung 10 wird das Unterteil 8 mittels Schrauben an vorgegebenen Sacklöchern 14 mit Innengewinde fixiert und dabei gleichzeitig die Steckverbindungen zu Steuer- und Stromleitung hergestellt. Anschließend wird die Blende 9 auf das Unterteil aufgerastet.

Das Gehäuse 2 ist rückseitig mit einer Abdeckplatte (in der Figur nicht dargestellt) verschlossen, aus der die Stecker für die oben beschriebenen elektrischen Anschlüsse herausragen. Die Abdeckplatte des Gehäuses 2 ist leicht zurückgesetzt, so dass die Gehäuserückseite als Aufnahme für die Wandhalterung 10 ausgelegt ist und diese vollständig umschließt.

Die Steuerplatine weist zusätzliche Anschlüsse für separate Funktionsmodule auf, wie zum Beispiel einen Sonnensensorstecker oder ein Funkmodul. Die Oberseite der Blende 9 weist Öffnungen 15 für die Durchführung dafür benötigter Leitungen auf, wie etwa einer Verbindungsleitung zu einem Sonnensensor.

Die Wandhalterung 10 wird bei der bauseitigen Vorbereitung der Installation des elektrischen Rollladens vormontiert. Gleichzeitig werden der elektrische Anschluss an die Hausspannung und die Steuer- und Stromleitung zum Motor unter Putz verlegt und bis in eine hinter der Wandhalterung 10 verborgene Unterputzdose geführt. Nach Abschluss aller Arbeiten wird die Steuereinheit 1 auf die Wandhalterung 10 aufgeschraubt und durch Anstecken der Steuer- und Stromleitung wird gleichzeitig der Daten- und Stromanschluss des Motors über die Steuereinheit 1 realisiert.

Bei einer anderen Ausführungsform der erfindungsgemäßen Vorrichtung umfasst das Gehäuse zusätzlich einen Zierrahmen, der um die Steuereinheit verläuft und der den Rand des Basismoduls vollständig überdeckt. Der Rahmen weist an seiner der Wand zugekehrten Unterseite einen nach Innen ragenden, umlaufenden Steg auf, auf dem das Unterteil des Gehäuses und die Blende aufliegen, so dass der Zierrahmen zusammen mit dem Unterteil am Basismodul fixiert wird.

## Patentansprüche

1. Vorrichtung zur Ansteuerung eines elektrischen Antriebs für eine Verdunkelungseinrichtung, umfassend
• ein Basismodul (10), das an einer Wand oder in einer Wandöffnung fixiert und mit einem Netzanschluss (13) zur Stromversorgung des Antriebs versehen ist, und
• eine mit dem Basismodul (10) elektrisch und mechanisch lösbar verbundene Steuereinheit (1), die eine Schaltsteuereinrichtung sowie elektrische Eingabe- und Anzeigeelemente zur Ansteuerung des Antriebs trägt, **dadurch gekennzeichnet,**
**dass** das Basismodul (10) als Wandhalterung ausgelegt ist und dass die Steuereinheit (1) ein Gehäuse (2) aufweist, welches das Basismodul (10) überdeckt.

2. Vorrichtung nach Anspruch 1, **dadurch gekennzeichnet, dass** das Gehäuse (2) der Steuereinheit (1) das Basismodul (10) umschließt.

3. Vorrichtung nach Anspruch 1 oder 2, **dadurch gekennzeichnet, dass** das Basismodul (10) eine plane Rückseite aufweist, mittels der es an einer Wand befestigt ist.

4. Vorrichtung nach Anspruch 3, **dadurch gekennzeichnet, dass** das Basismodul (10) als Aufputz-Wandmontageplatte ausgebildet ist.

5. Vorrichtung nach einem der vorhergehenden Ansprüche, **dadurch gekennzeichnet, dass** die Steuereinheit (1) mit einem Steckkontakt zur elektrischen Verbindung mit einer Steuerleitung (12) an den Antrieb versehen ist.

6. Vorrichtung nach einem der vorhergehenden Ansprüche, **dadurch gekennzeichnet, dass** die Stromversorgung für die elektrischen Eingabe- und Anzeigeelemente über den Netzanschluss (13) des Basismoduls (10) und einen in der Schaltsteuereinrichtung vorgesehenen Spannungswandler erfolgt.

7. Vorrichtung nach Anspruch 6, **dadurch gekennzeichnet, dass** der Spannungswandler als Schaltnetzteil ausgebildet ist.

8. Vorrichtung nach Anspruch 7, **dadurch gekennzeichnet, dass** das Schaltnetzteil eine Leistung zwischen 20 und 60 Watt bei einer Ausgangsspannung im Bereich von 12 bis 60 Volt aufweist.

9. Vorrichtung nach einem der vorhergehenden Ansprüche, **dadurch gekennzeichnet, dass** am elektrischen Antrieb eine Spannung von maximal 60 V anliegt.

10. Vorrichtung nach einem der vorhergehenden Ansprüche, **dadurch gekennzeichnet, dass** das Gehäuse (2) der Steuereinheit (1) eine vertikal orientierte Einbauachse sowie eine Rückseite aufweist, über welche die elektrische und mechanische Verbindung mit dem Basismodul (10) erfolgt, sowie eine Vorderseite mit einem nach oben oder schräg nach oben weisenden Flächenabschnitt (7), auf dem ein Anzeigelement (3) vorgesehen ist

11. Vorrichtung nach einem der vorhergehenden Ansprüche, **dadurch gekennzeichnet**, die Steuereinheit (1) mindestens einen Anschluss für ein separates Mess- oder Sensorelement aufweist.
